# EUROPÄISCHE PATENTSCHRIFT

(11) **EP 3 684 651 B1**
(45) Veröffentlichungstag und Bekanntmachung des Hinweises auf die Patenterteilung: **19.03.2025**
(21) Anmeldenummer: 18736864.2
(22) Anmeldetag: 29.06.2018
(51) Int. Cl.: B60R 21/00, B60R 22/02

(54) **FAHRGASTAUFNAHME FÜR EIN FAHRGESCHÄFT, VERFAHREN ZUM BETREIBEN EINER DERARTIGEN FAHRGASTAUFNAHME SOWIE FAHRGESCHÄFT MIT EINER DERARTIGEN FAHRGASTAUFNAHME**
PASSENGER RECEPTACLE FOR AN AMUSEMENT RIDE, METHOD FOR OPERATING SUCH A PASSENGER RECEPTACLE, AND AMUSEMENT RIDE HAVING SUCH A PASSENGER RECEPTACLE
ACCUEIL PASSAGER POUR UN TRAJET, PROCÉDÉ DE FONCTIONNEMENT D'UN TEL ACCUEIL PASSAGER ET VÉHICULE AYANT UN TEL ACCUEIL PASSAGER

(30) Priorität: 19.09.2017 DE 102017121730
(43) Veröffentlichungstag der Anmeldung: 29.07.2020
(73) Patentinhaber: Mack Rides IP GmbH & Co. KG, 79183 Waldkirch (DE)
(72) Erfinder: SORNIK, Frank, 79183 Waldkirch (DE); BECHERER, Markus, 79215 Elzach (DE); SCHRADE, Stephan, 79331 Teningen (DE)
(74) Vertreter: Westphal, Mussgnug & Partner Patentanwälte mbB
(86) Internationale Anmeldenummer: PCT/EP2018/067601
(87) Internationale Veröffentlichungsnummer: WO 2019/057357

(56) Entgegenhaltungen:
- EP-A2- 1 394 003
- DE-U1- 20 314 975
- US-A1- 2003 024 428
- US-A1- 2008 143 158

## Beschreibung

Die vorliegende Erfindung betrifft eine Fahrgastaufnahme für ein Fahrgeschäft, ein Verfahren zum Betreiben einer derartigen Fahrgastaufnahme sowie ein Fahrgeschäft mit einer derartigen Fahrgastaufnahme.

Um Fahrgastgeschäfte wirtschaftlich betreiben zu können, spielt die Attraktivität der Fahrgastgeschäfte eine sehr wichtige Rolle. Man ist daher bestrebt, möglichst viele für den Fahrgast überraschende Fahrerlebnisse zu realisieren. In Bezug auf Achterbahnen werden diese Fahrerlebnisse unter anderem mit Loopings, mit scharfen Kurven, mit Streckenabschnitten mit großen Steigungen sowie mit schraubenförmigen Streckenabschnitten realisiert.

Diese Fahrerlebnisse können nur dann realisiert werden, wenn die Fahrgäste sicher im Fahrgeschäft rückgehalten werden können. Hierzu weisen die Fahrgeschäfte eine Anzahl von Fahrzeugen mit Fahrgastaufnahmen auf, in welche sich die Fahrgäste hineinsetzen, hineinstellen oder hineinlegen können. In den Fahrgastaufnahmen werden die Fahrgäste mithilfe von Rückhalteeinrichtungen, die häufig Sicherungsbügel umfassen, gesichert. Die Sicherungsbügel werden hierzu von einer Offenstellung, in welcher der Zugang zur Fahrgastaufnahme für den Fahrgast freigegeben ist, in eine Schließstellung verstellt, in welcher der Fahrgast derart in der Fahrgastaufnahme mit der Rückhalteeinrichtung zusammenwirkt, dass er während der Fahrt auch bei hohen Beschleunigungen und Belastungen nicht aus der Fahrgastaufnahme herausfallen kann. Der Sicherungsbügel kann mithilfe einer Verstelleinrichtung zwischen der Offenstellung und der Schließstellung verstellt werden. Die Verstelleinrichtung wird üblicherweise mittels eines Hydrauliksystems betrieben. Es ist aber auch denkbar, die Verstelleinrichtung mechanisch, elektrisch oder pneumatisch zu betreiben. Es ist aber auch möglich, dass der Sicherungsbügel vom Fahrgast selbst oder von einem Mitarbeiter des Fahrgeschäfts zwischen der Offenstellung und der Schließstellung verstellt wird.

Zudem ist in vielen Fällen eine Feststelleinheit vorhanden, mit welcher der Sicherungsbügel in der Schließstellung fixiert werden kann. Die Feststelleinheit kann als mechanische Verriegelung ausgebildet sein, mit welcher der Sicherungsbügel an der Fahrgastaufnahme oder dem Fahrzeug in der Schließstellung fixiert werden kann. Bei moderneren Fahrgeschäften kann die Feststelleinheit Teil des Hydrauliksystems und dazu ausgebildet sein, den Sicherungsbügel auch in der Offenstellung zu fixieren, um unbeabsichtigte Bewegungen zu verhindern.

Für den Fall, dass die Feststelleinheit mittels eines Hydrauliksystems in der Schließstellung fixiert wird, kann im Falle eines Druckverlusts im Hydrauliksystem nicht mehr garantiert werden, dass der Sicherungsbügel in der Schließstellung fixiert ist. In diesem Fall kann es dazu kommen, dass der sich in der Fahrgastaufnahme befindende Fahrgast nicht mehr ausreichend gesichert ist, was es auf jeden Fall zu vermeiden gilt. Selbiges gilt entsprechend für den Fall, dass die Feststelleinheit nicht hydraulisch, sondern pneumatisch, mechanisch oder elektrisch betrieben wird.

Als weiteren Stand der Technik werden die Druckschriften US 2003 024 428 A1, US 2008 143 158 A1 und EP 1 394 003 A2 angegeben.

Aufgabe einer Ausführungsform der vorliegenden Erfindung ist es, eine Fahrgastaufnahme und ein Fahrgeschäft der eingangs genannten Art derart weiterzubilden, dass die Fahrgäste auch dann noch ausreichend in der Fahrgastaufnahme gesichert sind, wenn die Rückhalteeinrichtung nicht mehr in der Schließstellung gehalten werden kann. Des Weiteren liegt einer Ausgestaltung der vorliegenden Erfindung die Aufgabe zugrunde, ein Verfahren zum Betreiben einer Fahrgastaufnahme derart, dass die Fahrgäste auch dann noch ausreichend in der Fahrgastaufnahme gesichert sind, wenn die Rückhalteeinrichtung nicht mehr in der Schließstellung gehalten werden kann.

Diese Aufgabe wird mit den in den Anspruch 1 angegebenen Merkmalen gelöst. Vorteilhafte Ausführungsformen sind Gegenstand der Unteransprüche.

Die Erfindung betrifft eine Fahrgastaufnahme für ein Fahrgeschäft, umfassend einen Aufnahmeabschnitt zum Aufnehmen eines Fahrgasts, eine Rückhalteeinrichtung, welche zwischen einer Offenstellung, in welcher der Zugang zum Aufnahmeabschnitt für den Fahrgast ermöglicht ist, und einer Schließstellung, in welcher der aufgenommene Fahrgast im Aufnahmeabschnitt gehalten wird, verstellbar ist, eine Sicherungseinrichtung, die derart mit der Rückhalteeinrichtung zusammenwirkt, dass dann, wenn sich die Rückhalteeinrichtung von der Schließstellung weg bewegt oder weg bewegen will, eine weitere Bewegung der Rückhalteeinrichtung weg von der Schließstellung blockiert wird.

Nachdem der Fahrgast in der Offenstellung der Rückhalteeinrichtung in den Aufnahmeabschnitt aufgenommen worden ist, wird die Rückhalteeinrichtung in die Schließstellung bewegt. Zudem kann eine Feststelleinheit vorgesehen sein, mit welcher die Rückhalteeinrichtung zumindest in der Schließstellung feststellbar ist. Die Sicherungseinrichtung wirkt derart mit der Rückhalteeinrichtung zusammen, dass dann, wenn sich die Rückhalteeinrichtung von der Schließstellung weg bewegt oder weg bewegen will, eine weitere Bewegung der Rückhalteeinrichtung weg von der Schließstellung blockiert wird.

Die Sicherungseinrichtung blockiert das Bewegen der Rückhalteeinrichtung aus der Schließstellung heraus in Richtung der Offenstellung, sobald diese Bewegung ein bestimmtes Maß überschritten hat. Mit anderen Worten muss die Rückhalteeinrichtung einen bestimmten, wählbaren Weg aus der Schließstellung in Richtung der Offenstellung zurückgelegt haben, damit die Sicherungseinrichtung eine weitere Bewegung der Rückhalteeinrichtung zur Offenstellung hin blockiert. Dieser Weg wird so gewählt, dass in die Rückhalteeinrichtung in der Stellung ("Blockierstellung"), in welcher die Sicherungseinrichtung die weitere Bewegung blockiert, die Fahrgäste immer noch ausreichend in der Fahrgastaufnahme gesichert sind. Daher wird die Blockierstellung sehr nahe an der Schließstellung liegen.

Die Blockierstellung kann aber auch so gewählt werden, bereits dann, wenn sich die Rückhalteeinrichtung von der Schließstellung weg bewegen will, wie weitere Bewegung weg von der Schließstellung blockiert wird. In diesem Fall ist das Maß, um welche sich die Rückhalteeinrichtung aus der Schließstellung heraus in Richtung der Offenstellung bewegen muss, gleich null. Die Blockierstellung ist in diesem Fall gleich der Schließstellung.

Ein wesentlicher Aspekt der vorliegenden Erfindung ist, dass das Blockieren wegabhängig ist, worin sich die vorliegende Erfindung beispielsweise von einem gurtbasierten Rückhaltesystem in einem Kraftfahrzeug unterscheidet, welches kraftabhängig blockiert, also in dem Fall, dass die auf den Gurt wirkende Kraft ein bestimmtes Maß überschreitet. Dass der Weg auch die Länge "null" haben kann, ist kein Widerspruch zum wegabhängigen Blockieren.

Wie eingangs erwähnt, kann die Fahrgastaufnahme eine Feststelleinheit aufweisen, mit welcher die Rückhalteeinrichtung zumindest in der Schließstellung feststellbar ist. Bei einem Versagen der Feststelleinheit wird die Rückhalteeinrichtung aus der Schließstellung in Richtung der Offenstellung bewegt, so dass unabhängig von der auf die Rückhalteeinrichtung wirkende Kraft diese die Blockierstellung erreicht. Wie erwähnt, kann die Feststelleinheit hydraulisch betätigt sein. Es kann sein, dass der Hydraulikdruck relativ langsam abfällt, so dass die Rückhalteeinrichtung ebenfalls relativ langsam aus der Schließstellung in die Offenstellung bewegt wird. In diesem Fall würde ein kraftabhängiges Rückhaltesystem, wie es aus einem Kraftfahrzeug bekannt ist, die Bewegung der Rückhalteeinrichtung nicht blockieren und wäre daher wirkungslos.

Um ein wegeabhängiges Blockieren umzusetzen, kann die Sicherungseinrichtung beispielsweise eine mit dem Sicherungsbügel gekoppelte Lochscheibe mit einem bogenförmigen Langloch aufweisen, in welches ein Bolzen eingreift. Beim Bewegen aus der Schließstellung in Richtung der Offenstellung wird die Lochscheibe gedreht. Beim Erreichen der Blockierstellung schlägt der Bolzen an ein Ende des Langlochs ein und verhindert die weitere Bewegung des Sicherungsbügels.

Für den Fall, dass das Blockieren bereits dann erfolgen soll, wenn sich die Rückhalteeinrichtung von der Schließstellung weg bewegen will, wird die Lochscheibe nicht mit einem bogenförmigen Langloch, sondern mit einer kreisrunden Bohrung versehen, in welche der Bolzen passgenau eingreift.

Um den Zugang zum Aufnahmeabschnitt beim Ein- und Aussteigen der Fahrgäste bei Stillstand des Fahrgeschäfts zu ermöglichen, wird der Bolzen aus dem Langloch oder der Bohrung herausgefahren, so dass der Sicherungsbügel in die Offenstellung bewegt werden kann.

Für den Fall, dass eine Feststelleinheit vorhanden ist, wird eine Redundanz geschaffen, die sicherstellt, dass der Fahrgast auch dann noch sicher in der Fahrgastaufnahme aufgenommen ist, wenn die Feststelleinheit nicht mehr fehlerfrei arbeitet. Dies liegt insbesondere daran, dass die Sicherungseinrichtung unabhängig von der Feststelleinheit arbeitet.

Erfindungsgemäß weist das Fahrgeschäft eine Anzahl von Fahrzeugen auf und die Sicherungseinrichtung umfasst zumindest ein Zugkraftübertragungsmittel, welches mit einem ersten Ende an der Rückhalteeinrichtung und mit einem zweiten Ende an der Fahrgastaufnahme oder dem Fahrzeug befestigt oder befestigbar ist und welches dann, wenn sich die Rückhalteeinrichtung von der Schließstellung weg bewegt oder wegbewegen will, eine weitere Bewegung der Rückhalteeinrichtung weg von der Schließstellung blockiert.

Im einfachsten Fall kann das Zugkraftübertragungsmittel als ein Zugseil ausgebildet sein, welches an seinem zweiten Ende ortsfest an der Fahrgastaufnahme oder dem Fahrzeug befestigt ist und mit seinem ersten Ende beispielsweise mit dem Sicherungsbügel der Rückhalteeinrichtung verbunden wird, wenn sich der Sicherungsbügel in der Schließstellung befindet. Hierzu kann das Zugseil am ersten Ende einen Karabinerhaken oder einen Schekel aufweisen. Fällt die Feststelleinheit aus und bewegt sich der Sicherungsbügel aus der Schließstellung in die Offenstellung, wird das Zugseil gestrafft. In der Blockierstellung lässt das Zugseil keine weitere Bewegung in Richtung der Offenstellung zu und überträgt die auf den Sicherungsbügel wirkenden Kräfte auf die Fahrgastaufnahme. Der Fahrgast wird folglich trotz des Ausfalls der Feststelleinheit sicher in der Fahrgastaufnahme gehalten.

Erfindungsgemäß weist das Zugkraftübertragungsmittel ein Längenkompensationsmittel auf, um der Bewegung der Rückhalteeinrichtung zwischen der Offenstellung und der Schließstellung zu folgen. Wie oben erwähnt, kann das Zugkraftübertragungsmittel als ein Zugseil ausgestaltet sein. Das Zugseil kann aber seine Länge nicht ändern, weshalb es von der Rückhalteeinrichtung getrennt werden muss, wenn die Rückhalteeinrichtung in die Offenstellung gefahren werden soll. Hierzu ist ein entsprechender Arbeitsschritt notwendig, der entweder vom Fahrgast selbst oder von Mitarbeitern des Fahrgeschäfts durchgeführt werden muss, was zeitintensiv ist und die Kapazität des Fahrgeschäfts senkt. Zudem können Fehler entstehen, die zu Lasten der Sicherheit gehen. Ist das Zugkraftübertragungsmittel mit einem Längenkompensationsmittel ausgestattet, braucht das Zugkraftübertragungsmittel nicht von der Rückhalteeinrichtung getrennt zu werden, so dass die geschilderten Nachteile vermieden werden können. Längenkompensationsmittel können beispielsweise dadurch realisiert werden, dass das Zugkraftübertragungsmittel teleskopartig aufgebaut und längenverstellbar ist.

In einer weitgeführten Ausführungsform ist das Längenkompensationsmittel als eine verriegelbare Aufrolleinheit ausgebildet, auf welche das Zugkraftübertragungmittel aufrollbar und von welcher das Zugkraftübertragungsmittel abrollbar ist. Die Aufrolleinheit kann an der Fahrgastaufnahme, dem Fahrzeug oder der Rückhalteeinrichtung befestigt sein. Es bietet sich an, das Zugkraftübertragungsmittel als ein Gurt auszugestalten. Vorschlagsgemäß wird das Aufrollen und das Abrollen des Zugkraftübertragungsmittels aufgrund einer entsprechenden Verstellung der Rückhalteeinrichtung und insbesondere des Sicherungsbügels zwischen der Schließstellung und der Offenstellung bewirkt, so dass das Zugkraftübertragungsmittel nicht zusätzlich zum Verstellen des Sicherungsbügels betätigt werden muss.

Die US 7 837 566 B2 offenbart ein Gurtsystem für eine Fahrgastaufnahme, bei welcher der Gurt in ein Gurtschloss eingebracht werden muss, nachdem der Fahrgast in der Fahrgastaufnahme Platz genommen hat. Entsprechend muss der Gurt wieder aus dem Gurtschloss entfernt werden, wenn der Fahrgast die Fahrgastaufnahme verlassen will. Hierdurch kann es schnell zu einer Verzögerung im Betriebsablauf kommen. Zudem sind Fehlbedienungen nicht auszuschließen.

Im Gegensatz dazu ist das insbesondere als ein Gurt ausgestaltete Zugkraftübertragungsmittel am ersten Ende an der Rückhalteeinrichtung und am zweiten Ende am Fahrzeug und/oder an der Fahrgastaufnahme befestigt ist, entfällt die Notwendigkeit des Einbringens und des Entfernens des Gurts in das bzw. aus dem Gurtschloss. Hierdurch wird ein ungehinderter Betrieb der Fahrgastaufnahme und folglich des Fahrgeschäfts ermöglicht, ohne dass es zu Verzögerungen kommt. Weder der Fahrgast noch ein Mitarbeiter des Fahrgeschäfts müssen aktiv besondere Handlungen vornehmen. Auch muss der Fahrgast nicht vom Mitarbeiter berührt werden. Zudem wird die Kapazität des Fahrgeschäfts nicht verringert.

In der US 6 637 341 B2 ist eine Fahrgastaufnahme offenbart, welche mit einem Gurtsystem ausgerüstet ist, das zwei Gurte und ein Zwischenelement aufweist. Die Gurte sind auf eine Aufrolleinheit aufrollbar. Dieses Gurtsystem dient dazu, den Fahrgast während der Fahrt sicher in der Fahrgastaufnahme zu halten und davor zu schützen, dass er zu stark gegen den Sicherungsbügel anschlägt. Dieses Gurtsystem ist nicht in der Lage, dafür zu sorgen, den Sicherungsbügel im Falle eines Ausfalls der Feststelleinheit in der Blockierstellung zu halten.

Gemäß einer weitergebildeten Ausführungsform ist das Zugkraftübertragungsmittel am ersten Ende mit einem Verbindungsmittel an der Rückhalteeinrichtung befestigt. Das Verbindungsmittel ermöglicht die nachträgliche Befestigung an bestehende Rückhalteeinrichtungen, so dass bestehende Fahrgeschäfte mit der Sicherungseinrichtung nachgerüstet werden können. Zudem muss die Rückhalteeinrichtung und insbesondere der Sicherungsbügel, der üblicherweise aus Rohren aufgebaut wird, konstruktiv nicht geändert werden, um die Zugkraftübertragungsmittel befestigen zu können. Insbesondere wird verhindert, dass der Sicherungsbügel geschwächt wird und somit bei geringeren Belastungen als gewünscht brechen könnte. Je nach Anwendungsfall kann das Zugkraftübertragungsmittel drehbar, gelenkig oder starr an der Rückhalteeinrichtung befestigt sein.

Nach Maßgabe einer weiteren Ausführungsform ist das Zugkraftübertragungsmittel mit einem Klemmmittel drehbar an der Rückhalteeinrichtung befestigt. Die drehbare Lagerung des Zugkraftübertragungsmittels am Sicherungsbügel ist insbesondere dann von Bedeutung, wenn das Zugkraftübertragungsmittel als Gurt ausgeführt ist. Hierdurch wird gewährleistet, dass das Zugkraftübertragungsmittel beim Verstellen des Sicherungsbügels von der Schließstellung in die Offenstellung weitgehend verwindungsfrei von der Aufrolleinheit abgerollt werden kann. Selbiges gilt auch im umgekehrten Fall, wenn das Zugkraftübertragungsmittel beim Verstellen des Sicherungsbügels von der Offenstellung in die Schließstellung auf die Aufrolleinheit aufgerollt werden soll. Ansonsten würde der Gurt bei einer nicht drehbaren Befestigung am Sicherungsbügel auf Biegung beansprucht werden, wodurch er beschädigt werden und brechen könnte.

Die Klemmmittel ermöglichen die nachträgliche Befestigung der Zugkraftübertragungsmittel an der Rückhalteeinrichtung, so dass eine bestehende Fahrgastaufnahme mit der vorschlagsgemäßen Sicherungseinrichtung nachgerüstet werden kann.

Es bietet sich an, das Zugkraftübertragungsmittel und/oder die Aufrolleinheit lösbar an der Fahrgastaufnahme oder der Sicherungseinrichtung zu befestigen. Hierzu kann das Klemmmittel beispielsweise als eine Rohrschelle ausgeführt sein. In vielen Fällen weisen die Sicherungsbügel einen im Wesentlichen kreisförmigen Querschnitt auf, so dass die Verwendung einer Rohrschelle oder einer Rohrklemme keine konstruktiven Änderungen am Sicherungsbügel erforderlich machen. Insbesondere muss keine Bohrung vorgesehen werden, welche zu einer Schwächung des Sicherungsbügels führen könnte. Bei einer Beschädigung, beim Überschreiten einer bestimmten Betriebsdauer oder im Zuge einer Überholung der Zugkraftübertragungsmittel und/oder der Aufrolleinheit können diese einfach ausgetauscht werden.

Erfindungsgemäß ist die Sicherungseinrichtung zumindest in der Offenstellung der Rückhalteeinrichtung außerhalb des Aufnahmeabschnitts angeordnet. Hierdurch wird der störungsfreie Zugang zum Aufnahmeabschnitt für den Fahrgast in der Offenstellung gewährleistet, so dass dieser problemlos und schnell ein- und aussteigen kann. Da hierdurch die zum Ein- und Aussteigen benötigte Zeit verringert werden kann, wird die Kapazität des Fahrgeschäfts erhöht.

Bei einer weitergebildeten Ausführungsform kann die Fahrgastaufnahme zumindest eine Seitenlehne aufweisen und die Sicherungseinrichtung außerhalb des von der Seitenlehne begrenzten Aufnahmeabschnitts angeordnet sein. Fahrgastaufnahmen sind üblicherweise mit zumindest einer Seitenlehne ausgestattet, um dem Fahrgast einen ausreichenden Seiteninhalt zu bieten. Die Seitenlehne kann Teil einer Rückenschalenkontur und somit nicht als ein separates Bauteil ausgeführt sein. In dieser Ausführungsform ist sichergestellt, dass der Fahrgast problemlos in den Aufnahmeabschnitt einsteigen und diesen wieder verlassen kann, ohne dass das Zugkraftübertragungsmittel hierbei stören würde.

Bei einer weiteren Ausführungsform können die Aufrolleinheit und das Verbindungsmittel so in der Fahrgastaufnahme angeordnet sein, dass in der Offenstellung der Rückhalteeinrichtung die Seitenlehne quer zur Einstiegsrichtung mit dem Zugkraftübertragungsmittel fluchtet oder entgegen der Einstiegsrichtung über das Zugkraftübertragungsmittel hervorsteht. Unter der Einstiegsrichtung ist die Richtung zu verstehen, in welche sich der Fahrgast bewegen muss, um in die Fahrgastaufnahme einsteigen zu können. In dieser Ausführungsform wird verhindert, dass das Zugkraftübertragungsmittel versehentlich doch in den Aufnahmeabschnitt gelangen kann. Die Seitenlehnen dienen in diesem Fall als eine Art Anschlag für die Zugkraftübertragungsmittel.

Eine weitergebildete Ausführungsform zeichnet sich dadurch aus, dass das Fahrgeschäft eine Anzahl von Fahrzeugen aufweist und die Sicherungseinrichtung zumindest ein Zugkraftübertragungsmittel umfasst, welches mit einem ersten Ende und mit einem zweiten Ende an der Fahrgastaufnahme oder am Fahrzeug befestigt und zwischen dem ersten Ende und dem zweiten Ende mit der Rückhalteeinrichtung wirkverbunden ist und welches dann, wenn sich die Rückhalteeinrichtung von der Schließstellung weg bewegt oder wegbewegen will, eine weitere Bewegung der Rückhalteeinrichtung weg von der Schließstellung blockiert.

Die Zugkraftübertragungsmittel können beispielsweise mittels eines an der Rückhalteeinrichtung angeordneten Rohres oder mittels einer Anzahl von Ösen, durch welche die Zugkraftübertragungsmittel durchgeführt werden, mit der Rückhalteeinrichtung wirkverbunden sein. In diesem Fall kann eine Bewegung der Zugkraftübertragungsmittel entlang ihrer Längsachse in Bezug auf die Rückhalteeinrichtung ermöglicht werden.

Wenn sich die Rückhalteeinrichtung in der Schließstellung befindet, ist der Fahrgast ähnlich wie bei einem Beckengurt im Fahrzeug oder im Flugzeug von dem Zugkraftübertragungsmittel umgeben. Für den Fall, dass beispielsweise der Sicherungsbügel im Betrieb des Fahrgeschäfts brechen sollte, sorgt das Zugkraftübertragungsmittel dafür, dass der Fahrgast nicht aus der Fahrgastaufnahme herausfallen kann. Insofern wird in diesem Fall die Sicherheit des Fahrgasts erhöht. Darüber hinaus wird der abgebrochene Teil des Sicherungsbügels vom Zugkraftübertragungsmittel an der Fahrgastaufnahme gehalten, so dass verhindert wird, dass der abgebrochene Teil unkontrolliert umherfliegt und andere Fahrgäste oder sich in der Umgebung des Fahrgeschäfts aufhaltende Personen verletzt.

In einer fortgebildeten Ausführungsform weist das Zugkraftübertragungsmittel ein Längenkompensationsmittel auf, um der Bewegung der Rückhalteeinrichtung zwischen der Offenstellung und der Schließstellung zu folgen. Wie oben erwähnt, kann das Zugkraftübertragungsmittel als ein Zugseil ausgestaltet sein. Das Zugseil kann aber seine Länge nicht ändern, weshalb es von der Rückhalteeinrichtung getrennt werden muss, wenn die Rückhalteeinrichtung in die Offenstellung gefahren werden soll. Hierzu ist ein entsprechender Arbeitsschritt notwendig, der entweder vom Fahrgast selbst oder von Mitarbeitern des Fahrgeschäfts durchgeführt werden muss, was zeitintensiv ist und die Kapazität des Fahrgeschäfts senkt. Zudem können Fehler entstehen, die zu Lasten der Sicherheit gehen. Ist das Zugkraftübertragungsmittel mit einem Längenkompensationsmittel ausgestattet, braucht das Zugkraftübertragungsmittel nicht von der Rückhalteeinrichtung getrennt zu werden, so dass die geschilderten Nachteile vermieden werden können. Längenkompensationsmittel können beispielsweise dadurch realisiert werden, dass das Zugkraftübertragungsmittel teleskopartig aufgebaut und längenverstellbar ist.

Nach einer weitergebildeten Ausführungsform umfasst das Zugkraftübertragungsmittel zwei Zugkraftübertragungsabschnitte, welche jeweils am ersten Ende mit einem Verbindungsmittel an der Rückhalteeinrichtung befestigt sind und auf zumindest eine verriegelbare Aufrolleinheit aufrollbar und von dieser abrollbar sind.

Aus technischer Sicht ist es in den meisten Fällen ausreichend, nur ein Zugkraftübertragungsmittel zum Blockieren des Sicherungsbügels bei Erreichen der Blockierstellung vorzusehen, welches beispielsweise auf an einer Seite der Fahrgastaufnahme angeordnet ist. Das Vorsehen eines zweiten Zugkraftübertragungsmittels sorgt für eine Redundanz für den Fall, dass zumindest eines der Zugkraftübertragungsmittel versagen sollte. Einige Fahrgeschäfte weisen Sicherheitsbügel mit nur einem Bügelrohr auf. Wenn der Sicherheitsbügel bricht, kann der Fahrgast immer noch mit dem zwischen den beiden Verbindungmitteln angeordneten Teil des Sicherheitsbügels gesichert werden.

Die Aufrolleinheit kann an der Fahrgastaufnahme, am Fahrzeug oder an der Rückhalteeinrichtung befestigt sein. Vorschlagsgemäß wird das Aufrollen und das Abrollen des Zugkraftübertragungsmittels aufgrund einer entsprechenden Verstellung der Rückhalteeinrichtung und insbesondere des Sicherungsbügels zwischen der Schließstellung und der Offenstellung bewirkt, so dass das Zugkraftübertragungsmittel nicht zusätzlich zum Verstellen des Sicherungsbügels betätigt werden muss. Hierdurch wird ein störungsfreier Betrieb der Fahrgastaufnahme und folglich des Fahrgeschäfts ermöglicht, ohne dass es zu Verzögerungen kommt. Weder der Fahrgast noch ein Mitarbeiter des Fahrgeschäfts müssen aktiv besondere Handlungen vornehmen. Auch muss der Fahrgast nicht vom Mitarbeiter berührt werden. Zudem wird die Kapazität des Fahrgeschäfts nicht verringert.

Nach Maßgabe einer weiteren Ausführungsform verläuft zwischen den beiden Zugkraftübertragungsmitteln ein insbesondere einstückiger Rückhaltegurt. In dieser Ausführungsform ist zwischen den beiden Zugkraftübertragungsmitteln, die jeweils an gegenüberliegenden Seiten der Fahrgastaufnahme angeordnet sind, ein Rückhaltegurt angeordnet, der ähnlich wie ein Beckengurt in einem Fahrzeug oder einem Flugzeug wirkt. Für den Fall, dass der Sicherungsbügel im Betrieb des Fahrgeschäfts brechen sollte, sorgt der Rückhaltegurt dafür, dass der Fahrgast nicht aus der Fahrgastaufnahme herausfallen kann. Insofern wird in diesem Fall die Sicherheit des Fahrgasts erhöht. Darüber hinaus wird der abgebrochene Teil des Sicherungsbügels vom Rückhaltegurt an der Fahrgastaufnahme gehalten, so dass verhindert wird, dass der abgebrochene Teil unkontrolliert umherfliegt und andere Fahrgäste oder sich in der Umgebung des Fahrgeschäfts aufhaltende Personen verletzt.

In dieser Ausführungsform stellt der Rückhaltegurt eine Verbindung zwischen den beiden Zugkraftübertragungsmitteln her. Folglich können die beiden Zugkraftübertragungsmittel und der Rückhaltegurt zu einer Einheit zusammengefasst werden. Die Verbindungsmittel können so gestaltet werden, dass sie eine Bewegung dieser Einheit zulassen. Folglich genügt nur eine Aufrolleinheit, auf welche diese Einheit aufgerollt werden kann. Die Verbindungsmittel müssen dann so ausgestaltet sein, dass sich die Zugkraftübertragungsmittel entlang ihrer Längsachse in Bezug auf die Rückhalteeinrichtung bewegen können.

Eine weitere Ausführungsform zeichnet sich dadurch aus, dass der Rückhaltegurt an den beiden Verbindungsmitteln befestigt ist. Es bietet sich an, die Verbindungsmittel, mit denen die Zugkraftübertragungsmittel am Sicherungsbügel befestigt sind, auch für die Befestigung des Rückhaltegurts zu verwenden. Hierdurch wird der technische Mehraufwand zum Bereitstellen des Rückhaltegurts gering gehalten. Wenn der Sicherungsbügel brechen und das beispielsweise als Rohrschelle ausgeführte Verbindungsmittel vom Bügel herabrutschen sollte, ist dennoch eine ausreichende Sicherung des Fahrgasts gewährleistet.

In einer weiteren Ausführungsform kann die Sicherungseinrichtung eine betätigbare Antriebseinrichtung umfassen, mit welcher die Sicherungseinrichtung antreibbar ist. In dieser Ausführungsform kann der Sicherungsbügel mithilfe der Sicherungseinrichtung geschlossen werden. Sofern vorhanden, wird das Hydrauliksystem entlastet, da die Anzahl der Schaltungen reduziert wird. Die entsprechenden Schaltventile werden weniger häufig betätigt. Zudem kann die Antriebseinrichtung das Zugkraftübertragungsmittel nach dem Schließen des Sicherungsbügels entlasten, so dass im Betrieb der Sicherungsbügel ausschließlich von der Feststelleinheit und vom Hydrauliksystem gehalten wird. Hierdurch wird das Zugkraftübertragungsmittel zumindest lastreduziert betrieben, wodurch sein Verschleiß minimiert werden kann.

Bei einer weiteren Ausführungsform umfasst die Antriebseinrichtung einen Elektromotor. Insbesondere für den Fall, dass die Feststelleinheit mittels eines Hydrauliksystems betätigt wird, sind zwei voneinander unabhängige Systeme vorhanden. Die Wahrscheinlichkeit eines zeitgleichen Ausfalls von zwei Systemen ist deutlich geringer als der Ausfall eines Systems. Ein Elektromotor kann genauer angesteuert werden als die vom Hydrauliksystem angesteuerte Feststelleinheit. Die Sicherungsbügel können unter Verwendung der Zugkraftübertragungsmittel zwischen der Offenstellung und der Schließstellung mit einem unterschiedlichen Drehmoment in die Schließstellung gezogen werden. Wenn sich der Sicherungsbügel noch nicht weit von der Offenstellung entfernt hat, kann das Zugkraftübertragungsmittel mit einem geringen Drehmoment angezogen werden. Wenn der Sicherungsbügel mit einem Fahrgast in Berührung kommen sollte, beispielsweise, weil dieser sich noch nicht vollständig in die Fahrgastaufnahme gesetzt hat, führt die Berührung nicht zu Verletzungen des Fahrgasts. Zudem kann der Elektromotor das Anziehen der Zugkraftübertragungsmittel in diesem Fall schnell unterbrechen, was bei einer hydraulischen Betätigung des Sicherungsbügels nur schwer umsetzbar ist. Wenn sich der Sicherungsbügel in der Nähe der Schließstellung befindet, kann das Drehmoment langsam erhöht werden, so dass der Sicherungsbügel sanft an den Fahrgast gepresst wird.

In einer weiteren Ausführungsform ist die Sicherungseinrichtung mittels eines Entlastungselements an der Fahrgastaufnahme oder an der Rückhalteeinrichtung befestigt. Das Vorspannelement nimmt bestimmte im Betrieb auf das Zugkraftübertragungsmittel wirkende Zugkräfte auf, so dass das Zugkraftübertragungsmittel lastreduziert betrieben und daher geschont wird.

Eine Variante der Erfindung betrifft eine Fahrgastaufnahme für ein Fahrgeschäft, umfassend einen Aufnahmeabschnitt zum Aufnehmen eines Fahrgasts, eine Rückhalteeinrichtung, welche zwischen einer Offenstellung, in welcher der Zugang zum Aufnahmeabschnitt für den Fahrgast ermöglicht ist, und einer Schließstellung, in welcher der aufgenommene Fahrgast im Aufnahmeabschnitt gehalten wird, verstellbar ist, und eine Sicherungseinrichtung, die eine betätigbare Antriebseinrichtung umfasst, mit welcher die Sicherungseinrichtung antreibbar ist, und die derart mit der Rückhalteeinrichtung zusammenwirkt, dass die Rückhalteeinrichtung zumindest von der Offenstellung in die Schließstellung bewegbar ist.

Diese Variante eignet sich insbesondere für Fahrgeschäfte, bei welchen die Rückhalteeinrichtung nicht mit einer Verstelleinrichtung zwischen der Offenstellung und der Schließstellung bewegbar ist. In dieser Variante kann die Sicherheitseinrichtung als Ersatz für eine Verstelleinrichtung verwendet werden. Wie bereits erwähnt, kann die Sicherheitseinrichtung so ausgestaltet werden, dass sie nachträglich an der Fahrgastaufnahme montiert wird. Folglich bietet diese Variante die Möglichkeit, ältere Fahrgeschäfte zu modernisieren und komfortabler und effektiver zu betreiben. Für den Fall, dass das Sicherheitsniveau des betreffenden Fahrgeschäfts als ausreichend angesehen wird, kann die Sicherheitseinrichtung als Ersatz für eine Verstelleinrichtung ohne die oben erläuterten Sicherheitsfunktionen verwendet werden. Es ist aber ebenfalls möglich, die Sicherheitseinrichtung mit den erläuterten Sicherheitsfunktionen und als Ersatz für eine Verstelleinrichtung zu betreiben.

Eine Ausgestaltung der Erfindung betrifft ein Verfahren zum Betreiben einer Fahrgastaufnahme nach einem der zuvor beschriebenen Ausführungsformen, welches folgende Schritte aufweist:
- Bewegen der Rückhalteeinrichtung in die Schließstellung, und
- für den Fall, dass sich die Rückhalteeinrichtung um ein wählbares Maß von der Schließstellung weg bewegt oder wegbewegen will, Blockieren einer weitere Bewegung der Rückhalteeinrichtung weg von der Schließstellung mittels der Sicherungseinrichtung.

Die technischen Effekte und Vorteile, die mit diesem Verfahren erörtert worden sind, entsprechen denjenigen, die für die betreffenden Ausführungsformen der Fahrgastaufnahme beschrieben worden sind. Zusammenfassend sei darauf verwiesen, dass eine wegabhängige Sicherung der Rückhalteeinrichtung geschaffen wird, die verhindert, dass die Rückhalteeinrichtung im Betrieb des Fahrgeschäfts so weit von der Schließstellung weg in Richtung der Offenstellung bewegt wird, dass die Fahrgäste nicht mehr ausreichend in der Fahrgastaufnahme gesichert sind. Sobald sich die Rückhalteeinrichtung aus der Schließstellung bewegt und die Blockierstellung erreicht, wird eine weitere Bewegung weg von der Schließstellung verhindert.

In einer weiteren Ausgestaltung des Verfahrens umfasst die Sicherungseinrichtung zumindest ein Zugkraftübertragungsmittel, welches zumindest lastreduziert betrieben wird, solange eine weitere Bewegung der Rückhalteeinrichtung weg von der Schließstellung mittels der Zugkraftübertragungsmittel nicht blockiert wird. Unter einem zumindest lastreduzierten Betrieb soll verstanden werden, dass die beim Betrieb des Fahrgeschäfts auf die Rückhalteeinrichtung wirkenden Kräfte hauptsächlich von der Feststelleinheit aufgenommen und somit nur sehr begrenzt in die Zugkraftübertragungsmittel eingeleitet werden. Der zumindest lastreduzierte Betrieb sorgt dafür, dass das Zugkraftübertragungsmittel geschont und nicht unnötig belastet wird.

Eine Ausführung der Erfindung betrifft ein Verfahren zum Betreiben einer Sicherungseinrichtung eines Fahrsitzes nach einer der vorherigen Ausführungsformen, wobei die Sicherungseinrichtung eine betätigbare Antriebseinrichtung umfasst, gekennzeichnet durch folgenden Schritt:
- Verstellen der Rückhalteeinrichtung von der Offenstellung in die Schließstellung mittels der Sicherungseinrichtung durch Betätigen der Antriebseinrichtung.

In dieser Ausführung wird insbesondere der Sicherungsbügel unter Verwendung des Zugkraftübertragungsmittels von der Offenstellung in die Schließstellung gezogen. In dieser Ausführung übernimmt die Sicherungseinrichtung auch die Funktion einer Verstelleinrichtung, die somit entfallen kann, was den Aufbau des betreffenden Fahrgeschäfts vereinfacht.

In einer weiteren Ausführung, bei der die Antriebseinheit als ein Elektromotor ausgestaltet ist, welcher eingerichtet ist, die Position des Sicherungsbügels zwischen der Offenstellung und der Schließstellung zu bestimmen, das Zugkraftübertragungsmittel auf eine verriegelbare Aufrolleinheit aufrollbar und von dieser abrollbar ist und die Aufrolleinheit mittels des Elektromotors antreibbar ist, umfasst das Verfahren folgenden Schritt:
- Verstellen des Sicherungsbügels von der Offenstellung in die Schließstellung mittels der Aufrolleinheit mit einem Drehmoment, welches abhängig von der Position der Rückhalteeinrichtung vom Elektromotor verändert wird.

Das Einrichten von Elektromotoren derart, dass sie die Position insbesondere des Sicherungsbügels zwischen der Offenstellung und der Schließstellung erkennen können, kann beispielsweise mittels eines Drehwertgebers realisiert werden. Folglich liegt eine Information über die momentane Position des Sicherungsbügels zwischen der Offenstellung und der Schließstellung vor. Das Drehmoment, mit welchem der Sicherungsbügel unter Verwendung der Zugkraftübertragungsmittel angezogen wird, kann positionsabhängig variiert werden. Wenn der Bügel aus der Offenstellung heraus in Richtung der Schließstellung bewegt wird, kann es durchaus sein, dass der ein oder andere Fahrgast noch nicht vollständig im Aufnahmeabschnitt Platz genommen hat und mit dem Sicherungsbügel kollidiert. Um die hieraus resultierenden Verletzungen so gering wie möglich zu halten, wird der Sicherungsbügel beim Verlassen der Schließstellung zunächst mit einem vergleichsweise geringen Drehmoment betrieben. Hat der Sicherungsbügel die Schließstellung nahezu erreicht, so deutet das darauf hin, dass der Fahrgast vorschriftsmäßig in der Fahrgastaufnahme sitzt. Dann kann das Drehmoment erhöht werden, um den Sicherungsbügel sanft auf den Körper des Fahrgasts zu pressen. Eine derartige positionsabhängige Änderung des Drehmoments sorgt für einen sicheren und angenehmen Schließvorgang des Sicherungsbügels, der mit einer hydraulischen Betätigung mit nur sehr hohem Aufwand umsetzbar wäre.

Eine Umsetzung der Erfindung betrifft ein Verfahren mit den folgenden Schritten:
- Betätigen der Antriebseinrichtung der Sicherungseinrichtung, und
- Bewegen der Rückhalteeinrichtung von der Offenstellung in die Schließstellung mittels der Sicherungseinrichtung.

Diese Variante eignet sich insbesondere für Fahrgeschäfte, bei welchen die Rückhalteeinrichtung nicht mit einer Verstelleinrichtung zwischen der Offenstellung und der Schließstellung bewegbar ist. In dieser Variante kann die Sicherheitseinrichtung als Ersatz für eine Verstelleinrichtung verwendet werden. Wie bereits erwähnt, kann die Sicherheitseinrichtung so ausgestaltet werden, dass sie nachträglich an der Fahrgastaufnahme montiert wird. Folglich bietet diese Variante die Möglichkeit, ältere Fahrgeschäfte zu modernisieren und komfortabler und effektiver zu betreiben. Für den Fall, dass das Sicherheitsniveau des betreffenden Fahrgeschäfts als ausreichend angesehen wird, kann die Sicherheitseinrichtung als Ersatz für eine Verstelleinrichtung ohne die oben erläuterten Sicherheitsfunktionen verwendet werden. Es ist aber ebenfalls möglich, die Sicherheitseinrichtung mit den erläuterten Sicherheitsfunktionen und als Ersatz für eine Verstelleinrichtung zu betreiben.

Eine Ausbildung der Erfindung betrifft ein Fahrgeschäft mit einer Fahrgastaufnahme nach einer der vorherigen Ausführungsformen oder Varianten, wobei die Fahrgastaufnahme eine Sicherungseinrichtung aufweist, welche mit einem Verfahren nach einem der zuvor erörterten Ausführungen oder Ausgestaltungen betreibbar ist.

Die technischen Effekte und Vorteile, die sich mit dem vorschlagsgemäßen Fahrgeschäft erreichen lassen, entsprechen denjenigen, die für die vorliegende Fahrgastaufnahme oder die vorliegenden Verfahren erörtert worden sind. Zusammenfassend sei darauf hingewiesen, dass mit der vorschlagsgemäßen Sicherungseinrichtung ein Fahrgast auch dann sicher in der Fahrgastaufnahme gesichert werden kann, wenn die Feststelleinheit nicht mehr einwandfrei funktioniert. Die Feststelleinheit wird in vielen Fällen mittels eines Hydrauliksystems betrieben, welche dafür sorgt, dass insbesondere der Sicherungsbügel sowohl in der Offenstellung als auch in der Schließstellung fixiert wird, so dass er sich nicht mehr bewegen lässt. Für den Fall, dass das Hydrauliksystem nicht mehr einwandfrei funktionieren sollte, wird vorschlagsgemäß eine Möglichkeit geschaffen, auch in diesem Fall den Sicherungsbügel beim Erreichen der Blockierstellung in dieser zu halten. Der Betrieb des Fahrgeschäfts wird hierdurch sicherer gemacht.

Beispielhafte Ausführungsformen der Erfindung werden im Folgenden unter Bezugnahme auf die beigefügten Zeichnungen näher erläutert. Es zeigen
- Figur 1a): ein erstes Ausführungsbeispiel einer erfindungsgemäßen Fahrgastaufnahme anhand einer perspektivischen Darstellung in der Offenstellung,
- Figur 1b): das in Figur 1a) gezeigte erste Ausführungsbeispiel der erfindungsgemäßen Fahrgastaufnahme anhand einer Seitenansicht in der Offenstellung,
- Figur 2a): das in Figur 1a) gezeigte erste Ausführungsbeispiel der erfindungsgemäßen Fahrgastaufnahme anhand einer perspektivischen Darstellung in der Schließstellung,
- Figur 2b): das in Figur 1a) gezeigte erste Ausführungsbeispiel der erfindungsgemäßen Fahrgastaufnahme anhand einer Seitenansicht in der Schließstellung,
- Figur 3a): ein zweites Ausführungsbeispiel der erfindungsgemäßen Fahrgastaufnahme anhand einer perspektivischen Darstellung in der Offenstellung,
- Figur 3b): das in Figur 3a) gezeigte zweite Ausführungsbeispiel der erfindungsgemäßen Fahrgastaufnahme anhand einer Seitenansicht in der Offenstellung,
- Figur 4a): das in Figur 3a) gezeigte zweite Ausführungsbeispiel der erfindungsgemäßen Fahrgastaufnahme anhand einer perspektivischen Darstellung in der Schließstellung,
- Figur 4b): das in Figur 3a) gezeigte zweite Ausführungsbeispiel der erfindungsgemäßen Fahrgastaufnahme anhand einer Seitenansicht in der Schließstellung,
- Figur 5: eine prinzipielle Darstellung einer erfindungsgemäßen Aufrolleinheit, und
- Figur 6: eine prinzipielle Darstellung eines Fahrgeschäfts, welches eine Anzahl der erfindungsgemäßen Fahrgastaufnahmen aufweist.

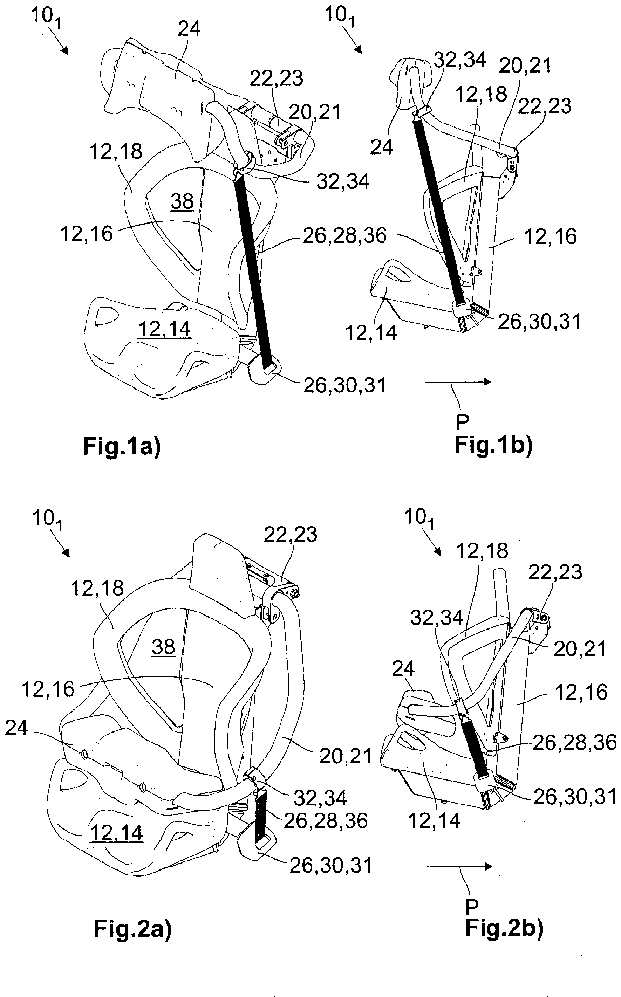

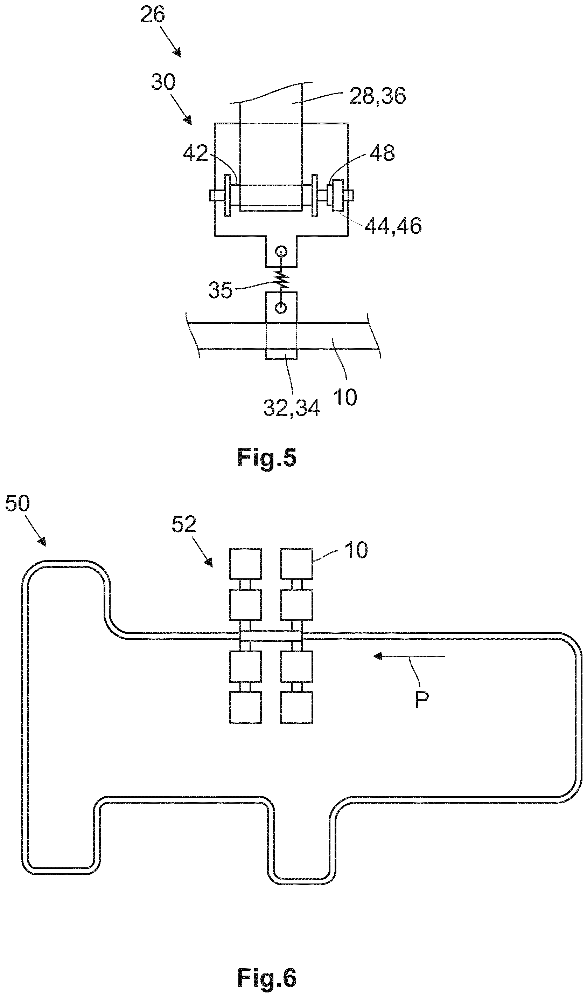

In den Figuren 1 und 2 ist ein erstes Ausführungsbeispiel der erfindungsgemäßen Fahrgastaufnahme 10₁ auf verschiedene Weise in unterschiedlichen Stellungen gezeigt. Die Fahrgastaufnahme 10₁ ist Teil eines Fahrzeugs 52, welches in Figur 6 dargestellt ist.

Die Fahrgastaufnahme 10₁ weist einen Aufnahmeabschnitt 12 auf, die im dargestellten Ausführungsbeispiel als ein Fahrgastsitz ausgestaltet ist, der eine Sitzfläche 14, eine Rückenlehne 16 und zwei Seitenlehnen 18 umfasst. Zudem weist die Fahrgastaufnahme 10₁ eine Rückhalteeinrichtung 20 auf, welche einen Sicherungsbügel 21 umfasst, der drehbar an der Fahrgastaufnahme 10₁ montiert ist und der mittels einer Verstelleinrichtung 22 zwischen einer Offenstellung und einer Schließstellung verstellbar ist. Die Verstelleinrichtung 22 ist in dargestellten Ausführungsbeispiel so eingerichtet, dass sie den Sicherheitsbügel 21 in der Offenstellung und in der Schließstellung feststellen kann. Insofern dient die Verstelleinrichtung 22 auch als eine Feststelleinheit 23. Hierzu ist die Feststelleinheit 23 beispielsweise mit einem nicht dargestellten Hydrauliksystem verbunden.

In der Offenstellung, welche in den Figuren 1a) und Figur 1b) dargestellt ist, ist der Aufnahmeabschnitt 12 für den Fahrgast zugänglich, so dass er sich in den Aufnahmeabschnitt 12 hineinsetzen und wieder aus dieser aussteigen kann.

Der Sicherungsbügel 21 weist ein Oberschenkelpolster 24 auf, welches in der Schließstellung auf die Oberschenkel des im Aufnahmeabschnitt 12 sitzenden, nicht dargestellten Fahrgasts aufgelegt wird, wie aus den Figuren 2a) und 2b) ersichtlich ist.

Darüber hinaus weist die erfindungsgemäße Fahrgastaufnahme 10₁ eine Sicherungseinrichtung 26 auf, welche ein Zugkraftübertragungsmittel 28 und ein Längenkompensationsmittel 31 umfasst. Das Längenkompensationsmittel 31 ist im vorliegenden Ausführungsbeispiel als eine verriegelbare Aufrolleinheit 30 ausgebildet. Das Zugkraftübertragungsmittel 28 ist unter Verwendung eines Verbindungsmittels 32, das in dem in den Figuren 1 und 2 dargestellten ersten Ausführungsbeispiel der Fahrgastaufnahme 10₁ als ein Klemmmittel 34, beispielsweise eine Rohrschelle, ausgestaltet ist, drehbar am Sicherungsbügel 21 befestigt und als ein Gurt 36 ausgestaltet. Die Aufrolleinheit 30 ist im Bereich der Sitzfläche 14 an der Fahrgastaufnahme 10₁ befestigt, kann aber auch am Fahrzeug 52, beispielsweise an dessen Bodenblech, befestigt sein. Der Gurt 36 kann ähnlich wie bei einem Anschnallgurt eines Fahrzeugs auf die Aufrolleinheit 30 aufgerollt und von ihr wieder abgerollt werden. Insbesondere in Figur 1a) ist erkennbar, dass der Gurt 36 außerhalb eines von den beiden Seitenlehnen 18 begrenzten Zwischenraums 38 der Fahrgastaufnahme 10₁ verläuft. Darüber hinaus stehen die beiden Seitenlehnen 18 in entgegen der Einstiegsrichtung über den Gurt 36 hervor, die mit dem in Figur 1b) dargestellten Pfeil P gekennzeichnet ist. Der Gurt 36 kann also selbst im entlasteten Zustand nicht ohne weiteres in den von den beiden Seitenlehnen 18 begrenzten Zwischenraum 38 eingebracht werden.

Die Fahrgastaufnahme 10₁ wird auf folgende Weise betrieben: Die Fahrgäste können in die Fahrgastaufnahmen 10 steigen, wenn sich der Sicherungsbügel 21 in der Offenstellung befindet. Sobald der Fahrgast im Aufnahmeabschnitt 12 Platz genommen hat, wird der Sicherungsbügel 21 mithilfe der Feststelleinheit 23 von der Offenstellung in die Schließstellung gestellt. Wie bereits erwähnt, ist die Feststelleinheit 23 mit einem nicht dargestellten Hydrauliksystem verbunden, welches dafür sorgt, dass der Sicherungsbügel 21 in der Offenstellung und in der Schließstellung fixiert wird. Beim Verstellen des Sicherungsbügels 21 von der Offenstellung in die Schließstellung wird der Gurt 36 auf die Aufrolleinheit 38 aufgerollt. Für den Fall, dass das Hydrauliksystem nicht einwandfrei funktionieren sollte und den Sicherungsbügel 21 nicht mehr in der Schließstellung fixieren kann und sich der Sicherungsbügel 21 aus der Schließstellung in Richtung der Offenstellung bewegt, sorgt die Sicherungseinrichtung 26 dafür, dass der Sicherungsbügel 21 beim Erreichen einer Blockierstellung nicht mehr weiter in Richtung der Offenstellung bewegen kann. Wie bereits erwähnt, ist die Aufrolleinheit 30 verriegelbar. Sobald der Gurt 36 aufgrund der Bewegung des Sicherungsbügels 21 aus der Schließstellung angezogen und von der Aufrolleinheit 30 abgerollt wird, blockiert die Aufrolleinheit 30 das weitere Abrollen des Gurts 36, sobald der Sicherungsbügel 21 die Blockierstellung erreicht hat. Die Blockierstellung ist so gewählt, dass sie sich sehr nahe an der Schließstellung befindet oder dieser entspricht. Infolgedessen wird der Fahrgast auch dann sicher im Aufnahmeabschnitt 12 gehalten, wenn das Hydrauliksystem nicht mehr einwandfrei funktionieren sollte.

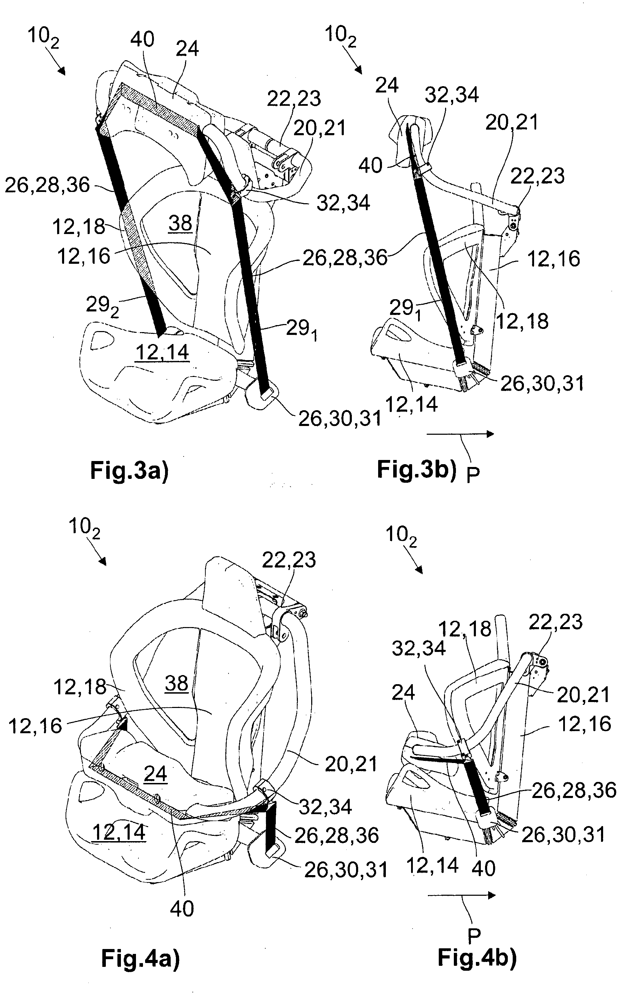

In den Figuren 3 und 4 ist ein zweites Ausführungsbeispiel der erfindungsgemäßen Fahrgastaufnahme 10₂ gezeigt. Der grundsätzliche Aufbau der Fahrgastaufnahme 10₂ gemäß dem zweiten Ausführungsbeispiel entspricht weitgehend demjenigen des ersten Ausführungsbeispiels. Allerdings umfasst die Sicherungseinrichtung 26 im zweiten Ausführungsbeispiel zwei Zugkraftübertragungsabschnitte 29₁, 29₂, die wiederum als Gurte 36 ausgeführt sind, und zwei Aufrolleinheiten 30, die jeweils an einer Seite der Fahrgastaufnahme 10₂ angeordnet sind. Wiederum sind die Gurte 36 mit jeweils einem Klemmmittel 34, beispielsweise einer Rohrschelle, drehbar am Sicherungsbügel 21 befestigt. Darüber hinaus ist zwischen den beiden Klemmmitteln 34 ein Rückhaltegurt 40 vorgesehen, welcher innerhalb des Oberschenkelpolsters 24 verläuft.

Die Fahrgastaufnahme 10₂ wird auf die für das erste Ausführungsbeispiel beschriebene Art und Weise betrieben. Im Gegensatz zum ersten Ausführungsbeispiel wird im zweiten Ausführungsbeispiel nicht nur der Sicherungsbügel 21 in der Schließstellung gehalten, wenn das Hydrauliksystem nicht mehr einwandfrei funktionieren sollte, sondern der Fahrgast wird von den beiden Gurten 36 und dem Rückhaltegurt 40 ähnlich wie bei einem Beckengurt eines Fahrzeugs umgeben, wenn der Sicherungsbügel 21 in die Schließstellung gestellt wird. Hierdurch wird erreicht, dass für den Fall, dass der Sicherungsbügel 21 im Betrieb brechen sollte, der Fahrgast mit den beiden Gurten 36 und dem Rückhaltegurt 40 weiterhin im Aufnahmeabschnitt 12 gehalten wird. Zudem wird der abgebrochene Teil des Sicherungsbügels 21 an der Fahrgastaufnahme 10₂ gehalten.

Im in den Figuren 3 und 4 dargestellten Ausführungsbeispiel sind die beiden Zugkraftübertragungsabschnitte 29₁, 29₂ jeweils an ihrem ersten Ende fest mit dem Klemmmittel 34 verbunden. Auch der Rückhaltegurt 40 ist fest mit den Klemmmitteln 34 verbunden. Beim Verstellen der Rückhalteeinrichtung 20 werden die beiden Zugkraftübertragungsabschnitte 29₁, 29₂ jeweils auf eines der als die Aufrolleinheiten 30 ausgeführten Längenkompensationsmittel 31 aufgerollt und von ihnen abgerollt. Dabei wird der Rückhaltegurt 40 relativ zur Rückhalteeinrichtung nicht bewegt.

Es ist aber auch möglich, die beiden zwei Zugkraftübertragungsabschnitte 29₁, 29₂ und den Rückhaltegurt 40 zu einer Einheit zusammenzufassen. Zudem können die Klemmmittel als eine Art Umlenkabschnitt ausgestaltet sein, welche eine Bewegung dieser Einheit entlang ihrer Längsachse zulassen. In diesem Fall genügt es, nur ein Längenkompensationsmittel 31 vorzusehen und diese Einheit auf der anderen Seite fest mit dem Fahrzeug 52 oder der Fahrgastaufnahme 10 zu verbinden.

In Figur 5 ist ein Ausführungsbeispiel einer Aufrolleinheit 30 anhand einer prinzipiellen Darstellung gezeigt. Es ist erkennbar, dass die Aufrolleinheit 30 lösbar mittels eines Klemmmittels 34 an einer Stütze der nur annäherungsweise dargestellten Fahrgastaufnahme 10 befestigt ist. Infolgedessen ist es ohne weiteres möglich, die Aufrolleinheit 30 von der Fahrgastaufnahme 10 zu lösen und gegen eine neue auszutauschen, sofern dies notwendig werden sollte. Darüber hinaus ist die Aufrolleinheit 30 mittels eines Entlastungselements 35, beispielsweise mit einer Feder, an der Fahrgastaufnahme 10 befestigt, kann aber auch am Fahrzeug 52 befestigt sein Wie erwähnt, wird der Sicherungsbügel 21 von der Feststelleinheit 23 in der Schließstellung gehalten. Allerdings kann sich der Sicherungsbügel 21 im Betrieb etwas bewegen, ohne dass hierdurch eine Gefahr für den Fahrgast ausgeht. Eine gewisse Bewegung kann sogar gewollt sein, um eine Dämpfungswirkung zu erreichen. Bei derartigen Bewegungen wird der Gurt 36 gespannt und unnötig belastet. Mit dem Entlastungselement 35 kann ein Teil der im Betrieb auf den Gurt 36 wirkenden Zugkraft aufgenommen werden, so dass der Gurt 36 zumindest lastreduziert betrieben werden kann. Hierdurch wird verhindert, dass der Gurt 36 unnötig belastet wird und nach einer vergleichsweise kurzen Betriebszeit ausgetauscht werden muss. Alternativ können der Gurt 36 und/oder der Rückhaltegurt 40 das Entlastungselement 35 aufweisen. Ebenso denkbar ist, den gesamten Gurt 36 oder den gesamten Rückhaltegurt 40 bis zu einer bestimmten Grenze elastisch auszugestalten.

Weiterhin ist erkennbar, dass die Aufrolleinheit 30 eine drehbar gelagerte Trommel 42 aufweist, auf welche der Gurt 36 aufgerollt werden kann. Weiterhin ist erkennbar, dass die Trommel 42 mittels einer Antriebseinrichtung 44 gedreht werden kann. Die Antriebseinrichtung 44 ist in diesem Fall als ein Elektromotor 46 ausgestaltet. Der Elektromotor 46 wirkt mit einer Positionserkennungseinrichtung 48 zusammen, die beispielsweise als ein Drehwertgeber ausgestaltet werden kann. Die Position des Sicherungsbügels 21 zwischen der Offenstellung und der Drehstellung kann mithilfe der Positionserkennungseinrichtung 48 ermittelt werden.

Hierdurch können folgende Funktionen realisiert werden: Der Sicherungsbügel 21 kann durch ein vom Elektromotor 46 veranlasstes Aufrollen des Gurts 36 auf die Trommel 42 von der Offenstellung in die Schließstellung bewegt werden. Hierdurch wird das Hydrauliksystem entlastet. Darüber hinaus kann der Elektromotor 46 das von ihm abgegebene Drehmoment beim Aufrollen des Gurts 36 abhängig von der Position des Sicherungsbügels 21 variieren. So kann der Sicherungsbügel 21 zunächst mit einem vergleichsweise geringen Drehmoment aus der Offenstellung in Richtung der Schließstellung bewegt werden und erst kurz vorm Erreichen der Schließstellung den Sicherungsbügel 21 mit einem erhöhten Drehmoment anziehen. Das Drehmoment kann beispielsweise erst dann erhöht werden, wenn das Oberschenkelpolster 24 auf den Oberschenkeln des Fahrgasts aufliegt.

Darüber hinaus kann der Elektromotor 46 den Gurt 36 wieder lösen, wenn der Sicherungsbügel 21 von der Feststelleinheit 23 in der Schließstellung fixiert worden ist. Hierdurch wird der Gurt 36 lastreduziert betrieben. Wie bereits erwähnt, weist die Sicherungseinrichtung 26 im zweiten Ausführungsbeispiel einen Rückhaltegurt 40 auf. Dieser kann mithilfe des Elektromotors 46 gestrafft werden.

Die Aufrolleinheit 30 kann beispielsweise auch mittels einer Sperrklinke oder einer Lochscheibe mechanisch verriegelt werden, so dass der Elektromotor 46 nach erfolgter Verriegelung stromlos geschaltet werden. Damit die Aufrolleinheit 30 mechanisch verriegelt werden kann, muss insbesondere die Trommel 42 in eine bestimmte Position gestellt werden. Der Elektromotor 46 kann unter Verwendung der von der Positionserkennungseinrichtung 48 die Aufrolleinheit 30 so stellen, dass die Verriegelung vorgenommen werden kann.

Wie bereits erwähnt, kann die Aufrolleinheit 30 derart ausgeführt sein, dass den Gurt 36 sperrt, wenn der Sicherungsbügel 21 aus der Schließstellung weg bewegt wird und die Blockierstellung erreicht. Hierzu kann die erwähnte Lochscheibe ein bogenförmiges Langloch aufweisen, in welches ein Bolzen eingebracht wird. Bewegt sich der Sicherungsbügel 21 aus der Schließstellung in Richtung der Offenstellung dreht sich auch die Lochscheibe. Die Blockierstellung ist dann erreicht, wenn der Bolzen an ein Ende des Langlochs anschlägt. Eine weitere Bewegung des Sicherungsbügels 21 in Richtung der Offenstellung ist dann ausgeschlossen.

In Figur 6 ist ein Fahrgeschäft 50 anhand einer prinzipiellen Draufsicht gezeigt, welches eine Anzahl von den erfindungsgemäßen Fahrgastaufnahmen 10 aufweist. Die Fahrgastaufnahmen 10 können prinzipiell beliebig angeordnet werden. Im dargestellten Beispiel weist das Fahrgeschäft 50 ein Fahrzeug 52 auf, bei welchem vier der erfindungsgemäßen Fahrgastaufnahmen 10 nebeneinander angeordnet sind und eine Reihe bilden. Das dargestellte Fahrzeug weist insgesamt zwei Reihen und damit insgesamt acht der erfindungsgemäßen Fahrgastaufnahmen 10 auf.

### Bezugszeichenliste

- 10, 10₁, 10₂: Fahrgastaufnahme
- 12: Aufnahmeabschnitt
- 14: Sitzfläche
- 16: Rückenlehne
- 18: Seitenlehne
- 20: Rückhalteeinrichtung
- 21: Sicherungsbügel
- 22: Verstelleinrichtung
- 23: Feststelleinheit
- 24: Oberschenkelpolster
- 26: Sicherungseinrichtung
- 28: Zugkraftübertragungsmittel
- 29, 29₁, 29₂: Zugkraftübertragungsabschnitt
- 30: Aufrolleinheit
- 31: Längenkompensationsmittel
- 32: Verbindungsmittel
- 34: Klemmmittel
- 35: Entlastungsmittel
- 36: Gurt
- 38: Zwischenraum
- 40: Rückhaltegurt
- 42: Trommel
- 44: Antriebseinrichtung
- 46: Elektromotor
- 48: Positionserkennungseinrichtung
- 50: Fahrgeschäft
- 52: Fahrzeug

- P: Pfeil

## Patentansprüche

1. Fahrgastaufnahme für ein Fahrgeschäft (50), umfassend
- einen Aufnahmeabschnitt (12) zum Aufnehmen eines Fahrgasts, wobei die Fahrgastaufnahme als ein Fahrsitz ausgestaltet ist, der eine Sitzfläche (14), eine Rückenlehne (16) und zwei Seitenlehen (18) umfasst,
- eine Rückhalteeinrichtung (20), welche einen Sicherheitsbügel (21) umfasst, der drehbar an der Fahrgastaufnahme montiert ist und mittels einer Verstelleinrichtung (22) zwischen einer Offenstellung, in welcher der Zugang zum Aufnahmeabschnitt (12) für den Fahrgast ermöglicht ist, und einer Schließstellung, in welcher der aufgenommene Fahrgast im Aufnahmeabschnitt (12) gehalten wird, verstellbar ist,
- eine Sicherungseinrichtung (26), die derart mit der Rückhalteeinrichtung (20) zusammenwirkt, dass dann, wenn sich die Rückhalteeinrichtung (20) von der Schließstellung weg bewegt oder weg bewegen will, eine weitere Bewegung der Rückhalteeinrichtung (20) weg von der Schließstellung blockiert wird, wobei
- das Fahrgeschäft eine Anzahl von Fahrzeugen (52) aufweist und
- die Sicherungseinrichtung (26) zumindest ein Zugkraftübertragungsmittel (28) umfasst, welches mit einem ersten Ende an der Rückhalteeinrichtung (20) und mit einem zweiten Ende an der Fahrgastaufnahme (10) oder dem Fahrzeug (52) befestigt oder befestigbar ist und welches dann, wenn sich die Rückhalteeinrichtung von der Schließstellung weg bewegt oder wegbewegen will, eine weitere Bewegung der Rückhalteeinrichtung (20) weg von der Schließstellung blockiert, und wobei das Zugkraftübertragungsmittel (28) ein Längenkompensationsmittel (31) aufweist, um der Bewegung der Rückhalteeinrichtung (20) zwischen der Offenstellung und der Schließstellung zu folgen,
**dadurch gekennzeichnet, dass**
- die Sicherungseinrichtung (26) in der Offenstellung und der Schließstellung der Rückhalteeinrichtung (20) außerhalb des Aufnahmeabschnitts (12) angeordnet ist.

2. Fahrgastaufnahme nach Anspruch 1,
**dadurch gekennzeichnet, dass** das Längenkompensationsmittel (31) als eine verriegelbare Aufrolleinheit (30) ausgebildet ist, auf welche das Zugkraftübertragungmittel (28) aufrollbar und von welcher das Zugkraftübertragungsmittel (28) abrollbar ist.

3. Fahrgastaufnahme nach einem der Ansprüche 1 oder 2,
**dadurch gekennzeichnet, dass** das Zugkraftübertragungsmittel (28) am ersten Ende mit einem Verbindungsmittel (32) an der Rückhalteeinrichtung (20) befestigt ist.

4. Fahrgastaufnahme nach Anspruch 3,
**dadurch gekennzeichnet, dass** das Zugkraftübertragungsmittel (28) mittels eines Klemmmittels (34) an der Rückhalteeinrichtung (20) befestigt ist.

5. Fahrgastaufnahme nach einem der Ansprüche 2 bis 4,
**dadurch gekennzeichnet, dass** das Zugkraftübertragungsmittel (28) und/oder die Aufrolleinheit (30) lösbar an der Fahrgastaufnahme (10) oder der Sicherungseinrichtung (26) befestigt ist.

6. Fahrgastaufnahme nach einem der Ansprüche 1 bis 5,
**dadurch gekennzeichnet, dass** der Aufnahmeabschnitt (12) zumindest eine Seitenlehne (18) aufweist und die Sicherungseinrichtung (26) außerhalb des von der Seitenlehne (18) begrenzten Aufnahmeabschnitts (12) angeordnet ist.

7. Fahrgastaufnahme nach einem der Ansprüche 1 bis 6,
**dadurch gekennzeichnet, dass** in der Offenstellung der Rückhalteeinrichtung (20) die Seitenlehne (18) quer zur Einstiegsrichtung (P) mit dem Zugkraftübertragungsmittel (28) fluchtet oder entgegen der Einstiegsrichtung (P) über das Zugkraftübertragungsmittel (28) hervorsteht.

8. Fahrgastaufnahme nach einem der vorherigen Ansprüche,
**dadurch gekennzeichnet, dass** die Sicherungseinrichtung (26) eine betätigbare Antriebseinrichtung (44) umfasst, mit welcher die Sicherungseinrichtung (26) antreibbar ist.

9. Fahrgastaufnahme nach Anspruch 8,
**dadurch gekennzeichnet, dass** die Antriebseinrichtung (44) einen Elektromotor (46) umfasst.

10. Fahrgastaufnahme nach einem der vorherigen Ansprüche,
**dadurch gekennzeichnet, dass** die Sicherungseinrichtung (26) mittels eines Entlastungselements (35) an der Fahrgastaufnahme (10) oder an der Rückhalteeinrichtung (20) befestigt ist.

## Claims

1. Passenger reception means for an amusement ride (50), comprising
- a receiving section (12) for receiving a passenger, wherein the passenger reception means are implemented as a passenger seat which comprises a seating surface (14), a back rest (16) and two side rests (18),
- a restraining device (20), which comprises a safety bar (21) which is rotatably mounted on the passenger reception means and which can be adjusted between an open position, in which it is rendered possible for the passenger to enter the receiving section (12), and a closed position, in which the received passenger is held in the receiving section (12),
- a securing device (26), which interacts with the restraining device (20) such that, when the restraining device (20) is moved, or the attempt is made to move it, out of the closed position, a further movement of the restraining device (20) out of the closed position is blocked, wherein
- the amusement ride (50) comprises a plurality of vehicles (52), and
- the securing device (26) comprises at least one means of tractive force transmission (28), one end of which is connected or connectable to the restraining device (20), and the other end of which is connected or connectable to the passenger reception means (10) or the vehicle (52) and which, when the restraining device (20) is moved, or the attempt is made to move it, out of the closed position, blocks a further movement of the restraining device (20) out of the closed position, and wherein the means of tractive force transmission (28) comprises a means of longitudinal compensation (31) for tracking the movement of the restraining device (20) between the open position and the closed position,
**characterized in that**,
- in the open position and in the closed position of the restraining device (20), is arranged outside of the receiving section (12).

2. Passenger reception means in accordance with claim 1,
the means of longitudinal compensation (31) is implemented as a lockable retractor unit (30), which the tractive force transmission means (28) can be rolled onto and which the tractive force transmission means (28) can be rolled off of.

3. Passenger reception means in accordance with claim 1 or 2,
**characterized in that** the first end of the tractive force transmission means (28) is attached to the restraining device (20) by means of a connection element (32).

4. Passenger reception means in accordance with claim 3,
**characterized in that** the tractive force transmission means (28) is detachably attached to the restraining device (20) by means of a clamping device (34).

5. Passenger reception means in accordance with any of claims 2 to 4,
**characterized in that** the tractive force transmission means (28), and/or the retractor unit (30), is (are) detachably attached to the passenger reception means (10) or to the securing device (26).

6. Passenger reception means in accordance with any of claims 1 to 5,
**characterized in that** the receiving section (12) comprises at least one side rest (18), and **in that** the securing device (26) is arranged outside of the receiving section (12) delimited by the side rest (18).

7. Passenger reception means in accordance with any of claims 1 to 6,
**characterized in that**, when the restraining device (20) is in the open position, the side rest (18) is aligned with the tractive force transmission means (28) transversely to the direction of boarding (P), or protrudes over the tractive force transmission means (28) in the direction opposite the direction of boarding (P).

8. Passenger reception means in accordance with any of of the preceding claims,
**characterized in that** the securing device (26) comprises an operable drive mechanism (44), by means of which the securing device (26) can be driven.

9. Passenger reception means in accordance with claim 8,
**characterized in that** the drive mechanism (44) comprises an electric motor (46).

10. Passenger reception means in accordance with any of the preceding claims,
**characterized in that** the securing device (26) is attached to the passenger reception means (10) or to the restraining device (20) by means of a pressure relieving element (35).

## Revendications

1. Réceptacle de passager pour un dispositif (50) de promenade, comprenant
- une partie (12) de logement pour le logement d'un passager, dans lequel le réceptacle de passager est conformé en siège de passager, qui comprend une surface (14) d'assise, un dossier (16) et deux accotoirs (18),
- un dispositif (20) de retenue, qui comprend un étrier (21) de sécurité, lequel est monté tournant sur le réceptacle de passager et est réglable au moyen d'un dispositif (22) de réglage entre une position ouverte, dans laquelle l'accès à la partie (12) de logement est permise au passager et une position fermée, dans laquelle le passager reçu est maintenu dans la partie (12) de logement,
- un dispositif (26) de sécurité, qui coopère avec le dispositif (20) de retenue de manière à ce que, lorsque le dispositif (20) de retenue, s'éloigne de la position de fermeture ou lorsqu'on veut l'en éloigner, éloigner davantage le dispositif (20) de retenue de la position de fermeture est empêché, dans lequel
- le dispositif de promenade a un certain nombre de véhicules (52) et
- le dispositif (26) de sécurité comprend au moins un moyen (28) de transmission d'une force de traction, qui, par une première extrémité, est fixé au dispositif (20) de retenue et, par une deuxième extrémité, au réceptacle (10) de passager ou au véhicule (52) ou peut l'être et qui, lorsque le dispositif de retenue s'éloigne de la position de fermeture ou lorsque l'on veut l'en éloigner, empêche le dispositif (20) de retenue de s'éloigner davantage de la position de fermeture, et dans lequel le moyen (28) de transmission d'une force de traction a un moyen (31) de compensation de la longueur, afin de suivre le mouvement du dispositif (20) de retenue entre la position ouverte et la position fermée,
**caractérisé en ce que**
- le dispositif (26) de sécurité est, dans la position ouverte et dans la position de fermeture du dispositif (20) de retenue, disposé en dehors de la partie (12) de logement.

2. Réceptacle de passager suivant la revendication 1,
**caractérisé en ce que** le moyen (31) de compensation de la longueur est constitué sous la forme d'une unité (30) d'enroulement verrouillable, sur laquelle le moyen (28) de transmission d'une force de traction peut être enroulé et de laquelle le moyen (28) de transmission d'une force de traction peut être déroulé.

3. Réceptacle de passager suivant l'une des revendications 1 ou 2,
**caractérisé en ce que** le moyen (28) de transmission d'une force de traction est, à une première extrémité, fixé au dispositif (20) de retenue par un moyen (32) d'assemblage.

4. Réceptacle de passager suivant la revendication 3,
**caractérisé en ce que** le moyen (28) de transmission d'une force de traction est fixé au dispositif (20) de retenue à l'aide d'un moyen (34) de serrage.

5. Réceptacle de passager suivant l'une des revendications 2 à 4,
**caractérisé en ce que** le moyen (28) de transmission d'une force de traction et/ou d'une unité (30) d'enroulement est fixé de manière amovible au réceptacle (10) de passager ou au dispositif (26) de sécurité.

6. Réceptacle de passager suivant l'une des revendications 1 à 5,
**caractérisé en ce que** la partie (12) de logement a au moins un accotoir (18) et le dispositif (26) de sécurité est disposé en dehors de la partie (12) de logement délimitée par l'accotoir (18).

7. Réceptacle de passager suivant l'une des revendications 1 à 6,
**caractérisé en ce que**, dans la position ouverte du dispositif (20) de retenue, l'accotoir (18) est, transversalement au sens (P) d'accès, à affleurement avec le moyen (28) de transmission d'une force de traction ou, dans le sens contraire au sens (P) d'accès, va au-delà du moyen (28) de transmission d'une force de traction.

8. Réceptacle de passager suivant l'une des revendications précédentes,
**caractérisé en ce que** le dispositif (26) de sécurité comprend un dispositif (44) d'entraînement, qui peut être actionné, par lequel le dispositif (26) de sécurité peut être entraîné.

9. Réceptacle de passager suivant la revendication 8,
**caractérisé en ce que** le dispositif (44) d'entraînement comprend un moteur (46) électrique.

10. Réceptacle de passager suivant l'une des revendications précédentes,
**caractérisé en ce que** le dispositif (26) de sécurité est fixé au réceptacle (10) de passager ou au dispositif (20) de retenue au moyen d'un élément (35) de délestage.
